# EUROPÄISCHE PATENTSCHRIFT

(11) **EP 1 710 885 B1**
(45) Veröffentlichungstag und Bekanntmachung des Hinweises auf die Patenterteilung: **29.10.2008**
(21) Anmeldenummer: 06005928.4
(22) Anmeldetag: 23.03.2006
(51) Int. Cl.: H02G 15/04, H02G 3/06

(54) **Kabeldurchführung**
Cable feedthrough
Traversée de câble

(30) Priorität: 08.04.2005 DE 102005017687; 20.02.2006 DE 102006008457
(43) Veröffentlichungstag der Anmeldung: 11.10.2006
(73) Patentinhaber: Lapp Engineering & Co, 6300 Zug (CH)
(72) Erfinder: Müller, Daniel, 71686 Remseck (DE); Runze, Peter, 70565 Stuttgart (DE)
(74) Vertreter: Hoeger, Stellrecht & Partner Patentanwälte

(56) Entgegenhaltungen:
- DE-A1- 19 615 602
- GB-A- 2 233 838
- US-A- 4 515 991
- US-A- 5 763 833

## Beschreibung

Die Erfindung betrifft eine Kabeldurchführung, umfassend ein an einem Gerät fixierbares Gehäuse, eine an dem Gehäuse gehaltene Fixierung für ein Kabel und ein an dem Gehäuse gehaltenes Schirmkontaktelement.

Derartige Kabeldurchführungen sind aus dem Stand der Technik bekannt vgl. z.B. US-A-515.991. Bei diesen besteht das Problem, dass einerseits die Qualität des elektrischen Kontakts zwischen dem Schirmkontaktelement und einem Kabelschirm stets problembehaftet ist, insbesondere wenn sich das Kabel bewegt.

Der Erfindung liegt daher die Aufgabe zugrunde, eine Kabeldurchführung der eingangs beschriebenen Art derart zu verbessern, dass eine möglichst optimale Kontaktierung des Kabelschirms möglich ist.

Diese Aufgabe wird bei einer Kabeldurchführung der eingangs beschriebenen Art erfindungsgemäß dadurch gelöst, dass das Schirmkontaktelement ein einen Kabelschirm mit elastischen und elektrisch leitfähigen Borsten kontaktierendes Borstenelement umfasst.

Der Vorteil der erfindungsgemäßen Lösung ist darin zu sehen, dass durch die Kontaktierung des Kabelschirms mit Borsten eine einfache Möglichkeit besteht, aufgrund des vielfältigen Kontakts zwischen dem Borstenelement und dem Kabelschirm eine gute Verbindung zwischen dem Kabelschirm und dem Schirmkontaktelement herzustellen.

Ferner hat die Verwendung von elastischen und elektrisch leitfähigen Borsten den großen Vorteil, dass selbst eine Bewegung des Kabels relativ zum Schirmkontaktelement unproblematisch ist, da die Vielzahl von Borsten einer derartigen Bewegung problemlos folgen und die elektrische Verbindung zwischen dem Kabelschirm und dem Schirmkontaktelement aufrechterhalten kann.

Dabei hat es sich als besonders vorteilhaft erwiesen, wenn das Borstenelement über eine äußere Öffnung des Gehäuses in das Gehäuse einführbar und in dem Gehäuse festlegbar ist.

Das Borstenelement kann in unterschiedlichster Art und Weise in das Gehäuse einführbar sein. Eine Möglichkeit sieht vor, dass das Borstenelement lose in das Gehäuse einführbar ist.

Damit besteht die Möglichkeit, beispielsweise bei Demontage des Kabels, dieses mitsamt dem Borstenelement zu demontieren und das Kabel aus der Kabeldurchführung herauszuziehen, wobei das Borstenelement dann über die äußere Öffnung aus diesem entnehmbar ist.

Vorzugsweise ist das Borstenelement an einer am Gehäuse vorgesehenen Abstützung anlegbar.

Besonders günstig ist es dabei, wenn die Abstützung eine der äußeren Öffnung zugewandte gehäuseseitige Anlagefläche aufweist.

Diese Lösung hat den Vorteil, dass damit in einfacher Weise die Möglichkeit besteht, über die gehäuseseitige Abstützung einen elektrischen Kontakt zwischen dem Borstenelement und dem elektrisch leitfähigen Gehäuse herzustellen und aufrechtzuerhalten, so dass das Borstenelement in elektrisch leitendem Kontakt mit der Abstützung steht.

Alternativ dazu ist es denkbar, das Borstenelement so auszubilden, dass dieses in elektrisch leitendem Kontakt mit einer Innenfläche des Gehäuses steht.

Ein derartiger elektrisch leitender Kontakt zwischen dem Gehäuse und dem Borstenelement lässt sich dann technisch besonders einfach realisieren, wenn das Borstenelement durch ein sich durch elastische Vorspannung nach außen spreizendes Element an der Innenfläche des Gehäuses anliegt.

Ein derartiges sich nach außen spreizendes Element ist beispielsweise aus einem federelastischen Material hergestellt.

Ein derartiges durch elastische Vorspannung sich nach außen spreizendes Element könnten beispielsweise Vorsprünge oder Fahnen an dem Borstenelement sein.

Hinsichtlich der Festlegung des Borstenelements an dem Gehäuse wurden ebenfalls keine näheren Angaben gemacht. So sieht eine vorteilhafte Ausführungsform vor, dass das Borstenelement in dem Gehäuse kraftschlüssig fixiert ist.

In diesem Fall erfolgt somit die Fixierung des Borstenelements lediglich über einen Kraftschluss.

Eine derartige Fixierung lässt sich beispielsweise dadurch realisieren, dass das Borstenelement durch ein sich elastisch nach außen spreizendes Element an einer Innenfläche des Gehäuses kraftschlüssig anliegt.

Auch in diesem Fall kann das sich nach außen spreizende Element ein Vorsprung oder eine Fahne des Borstenelements sein.

Um das Borstenelement in der Kabeldurchführung sicher verankern zu können, wird vorzugsweise vorgeschlagen, dass das Borstenelement zwischen der gehäuseseitigen Anlagefläche und der Fixierung in dem Gehäuse angeordnet ist, so dass eine einfach realisierbare Fixierung des Borstenelements möglich ist.

Eine günstige Lösung sieht vor, dass das Borstenelement durch seine Lage zwischen der gehäuseseitigen Abstützung und der Fixierung festgelegt ist.

Um den elektrischen Kontakt zwischen dem Borstenelement der gehäuseseitigen Anlagefläche sicher aufrechterhalten zu können, ist zweckmäßigerweise vorgesehen, dass die Fixierung das Borstenelement mit einer elastischen Kraft in Richtung der gehäuseseitigen Anlagefläche beaufschlagt, so dass eine sichere elektrisch leitende Verbindung zwischen Gehäuse und Borstenelement herstellbar ist.

Eine derartige Erzeugung einer von der Fixierung auf das Borstenelement wirkenden elastischen Kraft lässt sich besonders einfach dann realisieren, wenn das Fixieren des Kabels in der Fixierung eine Kraft auf die Fixierung erzeugt, welche das Borstenelement in Richtung der gehäuseseitigen Anlagefläche beaufschlagt.

Im einfachsten Fall ist eine derartige Fixierung so ausgebildet, dass diese einen in das Gehäuse einsetzbaren Einsatz umfasst, mit welchem das Kabel fixierbar ist.

Mit einem derartigen Einsatz lässt sich in einfacher Art und Weise die für die Fixierung des Borstenelements und der gehäuseseitigen Anlagefläche günstige Kraft erzeugen.

Dabei ist zweckmäßigerweise der Einsatz so ausgebildet, dass er elastische Bereiche aufweist, die durch eine Hutmutter beaufschlagbar sind, um das Kabel mittels der Fixierung festhalten zu können.

Besonders zweckmäßig ist es dabei, wenn die Hutmutter den Einsatz in Richtung der gehäuseseitigen Anlagefläche beaufschlagt.

Ferner ist es zweckmäßig, wenn der Einsatz das Borstenelement in Richtung der gehäuseseitigen Anlagefläche beaufschlagt.

Hinsichtlich des Aufbaus des Borstenelements wurden im Zusammenhang mit der bisherigen Beschreibung der einzelnen Ausführungsformen keine näheren Angaben gemacht. So sieht eine vorteilhafte Lösung vor, dass das Borstenelement mindestens einen um eine Mittelachse eines Kabeldurchführungskanals zumindest teilweise umlaufenden Borstenkranz aufweist.

Dabei ist es hinsichtlich einer guten Kontaktierung des Kabelschirms günstig, wenn der Borstenkranz im Wesentlichen um die Mittelachse umlaufend ausgebildet ist.

Noch vorteilhafter ist es, wenn das Borstenelement zwei in Richtung der Mittelachse versetzt zueinander angeordnete Borstenkränze aufweist.

Ferner lässt sich das Borstenelement besonders einfach dann in der erfindungsgemäßen Lösung einsetzen, wenn das Borstenelement einen Borstenträger aufweist, in welchem die Borsten sicher verankert sind.

Eine vorteilhafte Realisierungsmöglichkeit ist die, dass der Borstenträger C-förmig oder ringähnlich ausgebildet ist.

Dabei ist es besonders günstig, wenn der Borstenträger aus einem federelastischen Material hergestellt ist.

In diesem Fall lässt sich in besonders einfacher Weise der Borstenträger herstellen und in die für diesen vorgesehene Stelle einsetzen.

Besonders einfach ist es bei dieser Lösung, den Borstenträger so auszubilden, dass dieser das sich nach außen spreizende Element bildet, da eine derartige Form bei geeigneter Materialwahl des Borstenträgers aus einem federelastischen Material radial sich außen spreizend ausgebildet werden kann.

Eine besonders günstige Ausführungsform des Borstenträgers sieht vor, dass dieser als mit einem radialen Schlitz versehener Ringkörper ausgebildet ist, der radial unter Verengung der Breite des Schlitzes zusammengedrückt werden kann und dann in einem Zustand ist, in der er die Tendenz hat, sich radial nach außen zu spreizen.

Eine sichere Verankerung der Borsten könnte beispielsweise über eine stoffschlüssige Fixierung der Borsten an dem Borstenträger erfolgen.

Besonders zweckmäßig ist es, wenn die Borsten in dem Borstenträger durch eine U-förmige Umbiegung verankert sind, welche eine sichere Fixierung der Borsten in dem Borstenträger zulässt.

Eine derartige U-förmige Umbiegung der Borsten zur vorteilhaften Verankerung derselben lässt sich konsequent dahingehend nutzen, dass die Borsten als Doppelborsten ausgebildet sind und dass sich jede Borste von jeweils einem Schenkel der U-förmigen Umbiegung aus erstreckt.

Somit lässt sich in einfacher Weise eine relative große Zahl von Borsten realisieren, die aber anderseits zuverlässig in dem Borstenträger verankert sind.

Der Borstenträger kann dabei in unterschiedlichster Art und Weise ausgebildet sein.

Insbesondere zur Verankerung der Borsten mit der U-förmigen Umbiegung hat es sich als vorteilhaft erwiesen, wenn der Borstenträger einen Innenkörper aufweist, welchen die U-förmige Umbiegung umgreift.

Besonders günstig ist es dabei, wenn der Innenkörper derart angeordnet ist, dass die U-förmige Umbiegung diesen auf seiner der Mittelachse abgewandten Seite umgreift.

Bei einer derartigen Lösung mit einem Innenkörper können die Borsten beispielsweise noch zusätzlich stoffschlüssig an dem Innenkörper verankert werden.

Aus Gründen einer einfachen Herstellbarkeit des Borstenträgers ist zweckmäßigerweise ein Außenkörper vorgesehen, welcher die Borsten im Bereich der U-förmigen Umbiegung an den Innenkörper angelegt hält.

Vorzugsweise ist dabei der Außenkörper durch Deformation auf die Einheit aus Borsten und Innenkörper aufgeformt und verspannt somit die U-förmige Umbiegung mit dem Innenkörper, um die Borsten sicher zwischen dem Innenkörper und dem Außenkörper zu fixieren.

Hinsichtlich der Ausrichtung der Borsten am Borstenträger wurden bislang keine näheren Angaben gemacht.

Eine besonders günstige Ausführung sieht vor, dass im den Kabelschirm nicht kontaktierenden Zustand sich die Borsten quer zur Mittelachse des Kabeldurchführungskanals erstrecken.

Besonders zweckmäßig ist es, wenn die Borsten in dem den Kabelschirm nicht kontaktierenden Zustand sich ungefähr radial zur Mittelachse erstrecken.

Zweckmäßigerweise ist es für eine zuverlässige Kontaktierung des Kabelschirms günstig, wenn die Borsten sich von dem Borstenträger bis zu einer Mittelöffnung hin erstrecken.

Vorzugsweise ist dabei die Mittelöffnung so gewählt, dass der Durchmesser geringer ist als ein Durchmesser eines Kabelschirms eines für eine derartige Kabeldurchführung vorgesehenen Kabels.

Darüber hinaus wurden im Zusammenhang mit der bisherigen Beschreibung der erfindungsgemäßen Lösung keinerlei Angaben zur Art der Borsten gemacht.

Im einfachsten Fall sind die Borsten aus einem im Querschnitt ungefähr runden oder ovalen Strang-Material hergestellt.

Es ist aber auch denkbar, dass die Borsten aus einem mindestens eine Flachseite aufweisenden Strang-Material hergestellt sind.

In diesem Fall sind die Borsten dann so ausgerichtet, dass die Flachseite dann an dem Innenkörper des Borstenträgers anliegt.

Auch hinsichtlich eines Durchmessers der Borsten wurden bislang keine näheren Angaben gemacht.

Um die Eigenschaft der Borsten, nämlich ihre große Flexibilität vorteilhaft ausnützen zu können, ist vorzugsweise vorgesehen, dass die Borsten eine Querschnittsfläche aufweisen, deren maximaler Durchmesser kleiner als 1 mm ist.

Eine besonders günstige Lösung sieht vor, dass die Borsten einen Durchmesser im Bereich von ungefähr 0,05 bis ungefähr 0,1 mm aufweisen.

Mit derartigen Durchmessern der Borsten lassen sich besonders günstige Eigenschaften hinsichtlich der Qualität der Kontaktierung und der Flexibilität der Kontaktierung bei im wesentlichen gleichbleibender Qualität.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Figur 1: ein erstes Ausführungsbeispiel einer teilweise in Längsrichtung geschnittenen erfindungsgemäßen Kabeldurchführung;
- Figur 2: ein Blick in Richtung des Pfeils A in Figur 1;
- Figur 3: einen vergrößerten Querschnitt durch ein erstes Ausführungsbeispiel eines erfindungsgemäßen Borstenelements;
- Figur 4: einen Schnitt längs Linie 4-4 in Figur 3;
- Figur 5: ein Schnitt ähnlich Figur 4 durch ein zweites Ausführungsbeispiel einer erfindungsgemäßen Kabeldurchführung;
- Figur 6: eine teilweise geschnittene perspektivische Darstellung eines dritten Ausführungsbeispiels einer erfindungsgemäßen Kabeldurchführung;
- Figur 7: eine Draufsicht auf die Kabeldurchführung gemäß dem dritten Ausführungsbeispiel in Richtung des Pfeils X in Figur 6.

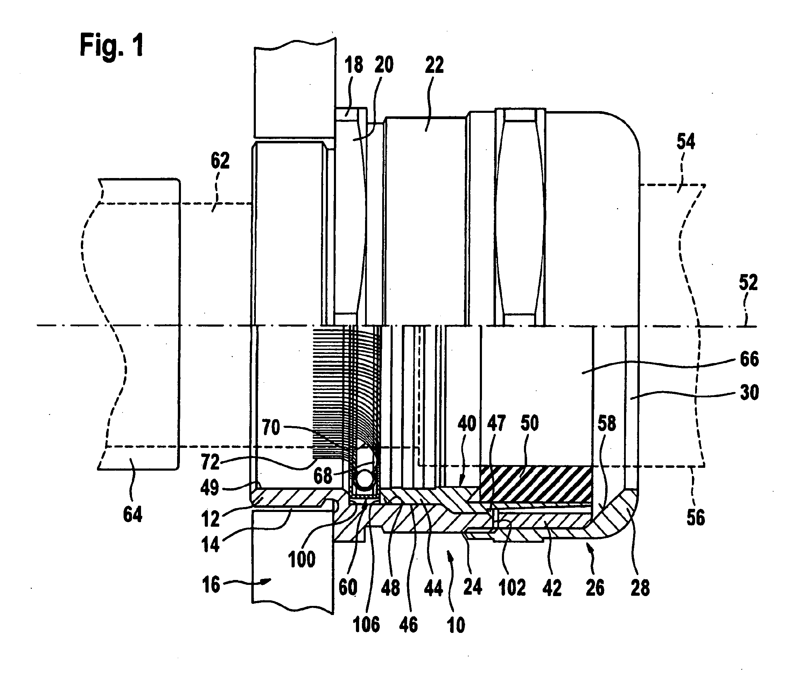

Ein Ausführungsbeispiel einer erfindungsgemäßen Kabeldurchführung, dargestellt in Figur 1, umfasst einen als Stutzen ausgebildetes Gehäuse, welcher mit einem Gewindeabschnitt 12 in eine Ausnehmung 14 einer Gerätewand 16 einschraubbar ist.

Ferner umfasst das Gehäuse 10 einen sich an den Gewindeabschnitt 12 anschließenden Flansch 18 mit einem Außenmehrkant 20, welcher beim Einschrauben des Gewindeabschnitts 12 in die Ausnehmung 14 gegen die Gerätewand 16 anlegbar ist.

Im Anschluss an den Flansch 18 erstreckt sich auf einer dem Gewindeabschnitt 12 gegenüberliegenden Seite ein rohrförmiger Abschnitt 22 des Gehäuses 10 bis zu einem an einem dem Flansch 18 gegenüberliegenden Ende des rohrförmigen Abschnitts 22 angeordneten Gewindeabschnitt 24, auf welchen eine als Ganzes mit 26 bezeichnete Hutmutter aufschraubbar ist, die an ihrer Abschlussseite 28 mit einer Öffnung 30 versehen ist.

In dem Gehäuse 10 sitzt ein als Ganzes mit 40 bezeichneter Einsatz, der vorzugsweise als Kunststoffteil ausgebildet ist und einen Lamellenkorb 42 aufweist, der im Bereich der Hutmutter 26 angeordnet ist und von der Hutmutter 26 überdeckt ist. An den Lamellenkorb 42 schließt sich eine Hülse 44 an, welche von einer endseitig des Gewindeabschnitts 24 angeordneten äußeren Öffnung 47 des Gehäuses 10 ausgehend sich in dieses in Richtung einer inneren Öffnung 49, endseitig des Gewindeabschnitts 12 angeordnet, in das Gehäuse 10 hinein erstreckt und mit ihrem Mantel 46 an einer Innenfläche 48 des rohrförmigen Abschnitts 22 des Gehäuses 10 geführt ist.

In dem Lamellenkorb 42 ist ferner ein Dichtring 50 angeordnet, welcher durch den Lamellenkorb 42 radial in Richtung auf eine Mittelachse 52 des Gehäuses 10 beaufschlagbar ist, um ein den Dichtring 50 durchsetzendes Kabel 54 im Bereich eines Kabelmantels 56 dicht abschließend zu beaufschlagen und zu fixieren.

Der Lamellenkorb 42 ist dabei in bekannter Weise durch eine konisch zur Mittelachse 52 verlaufende Druckfläche 58 in Richtung der Mittelachse 52 beaufschlagbar, um den Dichtring 50 in der beschriebenen Art und Weise zu bewegen.

Der Dichtring 50, der Einsatz 40 mit dem Lamellenkorb 42 und die Hutmutter 26 bilden insgesamt eine Fixierung für das Kabel 54.

In dem Gehäuse 10 sitzt ferner ein als Ganzes mit 60 bezeichnetes Schirmkontaktelement zur Kontaktierung eines Kabelschirms 62, welcher unter einer äußeren Isolationshülle 64 des Kabels 54 liegt.

Bei einem durch einen Durchführungskanal 66, welcher durch sich durch die Öffnung 30 der Hutmutter 26, durch die Hutmutter 26, den Dichtring 50, den Einsatz 40 und das Gehäuse 10 mit dem Gewindeabschnitt 12 und somit vollständig durch die Kabelverschraubung hindurch erstreckt, hindurchgeführten Kabel 54 wird vorzugsweise in einem innerhalb des Gehäuses 10 im Anschluss an den Dichtring 50 liegenden Bereich der freiliegende Kabelschirm 62 vorgesehen, der durch das Schirmkontaktelement 60 kontaktierbar ist.

Das Schirmkontaktelement 60 umfasst dabei seinerseits einen Borstenträger 68, von welchem ein erster Borstenkranz 70 und ein zweiter Borstenkranz 72 abstehen, die sich ausgehend vom Borstenträger 68 in unterschiedlichen Flächen erstrecken und in Richtung der Mittelachse 52 gesehen im Abstand voneinander aus dem Borstenträger 68 austreten.

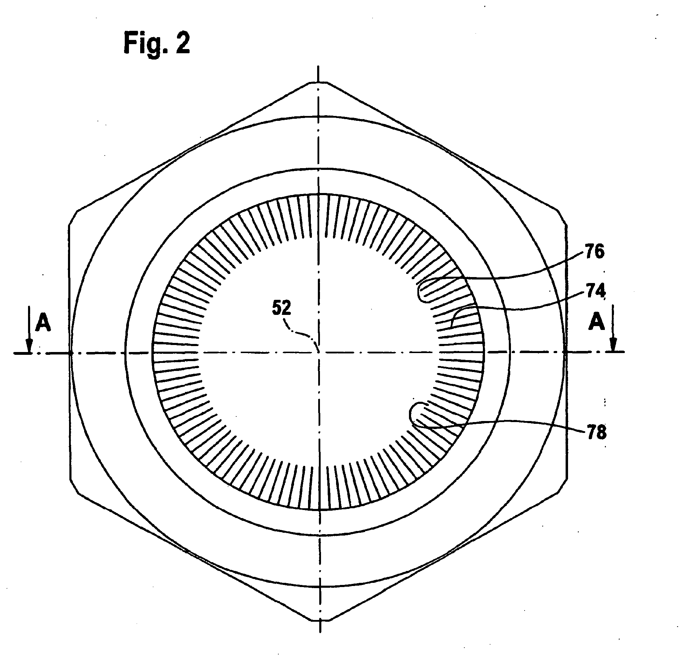

Wie in Figur 1 und 2 dargestellt, weisen die Borstenkränze 70 und 72 nebeneinander liegende einzelne Borsten 74 auf, die zunächst im wesentlichen in radialer Richtung aus dem Borstenträger 68 austreten und bei durch den Durchführungskanal 66 hindurchgeschobenem Kabel 54 in Richtung des Gewindeabschnitts 12 umgebogen sind und an dem Kabelschirm 62 zumindest mit ihren Endbereichen 76 anliegen.

Bei nicht durch den Durchführungskanal 66 hindurchgeschobenem Kabel 54 erstrecken sich die Borsten 74, wie in Figur 2 dargestellt, ausgehend von dem Borstenträger 68 im wesentlichen ungefähr in radialer Richtung zur Mittelachse 52 und bilden mit ihren Endbereichen 76 eine Mittelöffnung 78 des Schirmkontaktelements 60, deren Durchmesser geringer ist als der Durchmesser des Kabelschirms 62 der für diese Kabeldurchführung vorgesehenen Kabel.

Damit lassen sich durch einfaches Hindurchschieben des Kabels 54 mit freigelegtem Kabelschirm 62 ausgehend von der Öffnung 30 durch den Kabeldurchführungskanal 66 die Borsten 74 mit ihren Endbereichen 76 in Durchführungsrichtung umbiegen und legen sich an dem Kabelschirm 62 an.

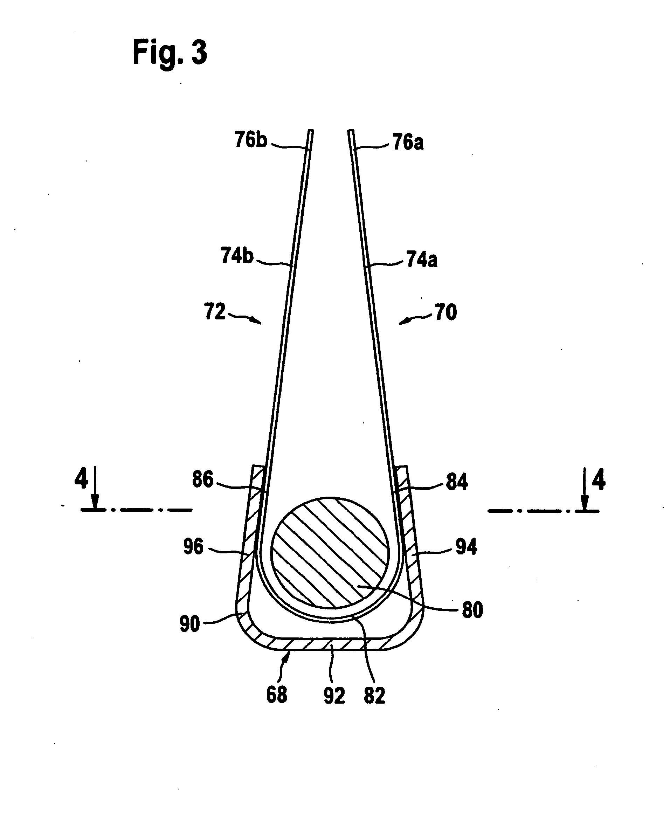

Wie in Figur 3 vergrößert dargestellt, umfasst der Borstenträger 68 einen ringförmigen Innenkörper 80, welcher beispielsweise einen kreisrunden Querschnitt aufweist und um diesen Innenkörper 80 ist eine U-förmige Umbiegung 82 gelegt, deren Schenkel 84, 86 sich dann jeweils in einer Borste, beispielsweise in den Borsten 74a und 74b, fortsetzen, wobei die Borsten 74a den Borstenkranz 70 und die Borsten 74b den zweiten Borstenkranz 72 bilden und wobei die Endbereiche 76a, 76b der Borsten 74a, 74b auf einer der Umbiegung 82 gegenüberliegenden Seite angeordnet sind.

Vorzugsweise sind die Borsten 74a und 74b mitsamt der Umbiegung 82 aus einem einstückigen elektrisch leitfähigen Drahtstück oder Flachmaterialstück hergestellt, das um den Innenkörper 80 des Borstenträgers 68 gelegt ist.

Es ist aber auch denkbar, die Umbiegung 82 aus einem umfangsseitig am Innenkörper 80 anliegenden elektrisch leitfähigen Materialstreifen auszubilden von welchem dann die einstückig angeformten Borsten 74a, b abstehen und durch welchen mehrere Borsten 74a, b zusammengehalten werden.

Zur Fixierung der Borsten 74a und 74b mitsamt der Umbiegung 82 am Innenkörper 80 umfasst der Borstenträger 68 noch einen Außenkörper 90, welcher als im Querschnitt U-förmig gebogenes Blechmaterialstück ausgebildet ist, welches mit einem Mittelschenkel 92 und zwei Seitenschenkeln 94 und 96 den Borstenträger 68 mit der um diesen gelegten Umbiegung 82 außenseitig umgreift, wobei die Seitenschenkel 94 und 96 an den Schenkeln 84, 86 der Umbiegung 82 anliegen, so dass der Innenkörper 80 mit der Umbiegung 82 in dem Außenkörper 90 formschlüssig fixiert ist und somit auch die Borsten 74a und 74b fest in dem Borstenträger 68 verankert sind.

Vorzugsweise ist dabei der Außenkörper 90 aus einem gut leitfähigen Metallblech ausgebildet, wobei die Seitenschenkel 94 und 96 durch einen Deformationsprozess an der Umbiegung 82 mit den Schenkeln 84 und 86 fest angelegt werden.

Damit sind die Borsten 74a und 74b unverlierbar und fest in dem Borstenträger 68 verankert, so dass ein Lösen der Borsten 74a und 74b aus dem Borstenträger 68 nur mit sehr geringer Wahrscheinlichkeit erfolgen kann.

Zur Fixierung des Borstenträgers 68 in dem Gehäuse 10 ist dieses im Anschluss an den Gewindeabschnitt 12 mit einer der äußeren Öffnung zugewandten Schulter 100 versehen, die eine quer zur Mittelachse 52 verlaufende Auflagefläche für den Borstenträger 68 darstellt, die radial bis zur Innenmantelfläche 48 des Gehäuses 10 verläuft.

Die Innenmantelfläche 48 verläuft ausgehend von der Schulter 100 sich nicht verengend, sondern gegebenenfalls geringfügig erweiternd bis zu einer Stirnseite 102 des Gehäuses 10, an welche auch der Gewindeabschnitt 24 angrenzt, so dass über die von der Stirnseite 102 definierte äußere Öffnung 47 des Gehäuses 10 der Borstenträger 68 in das Gehäuse 10 frei einführbar und auf der Schulter 100 auflegbar ist.

Zur Fixierung des Borstenträgers 68 wird dieser durch eine Stirnseite 106 der Hülse 44 des Einsatzes 40 beaufschlagt, wobei der gesamte Einsatz 40 dadurch stets in Richtung der Schulter 100 beaufschlagt ist, da die Druckfläche 58 bei aufgeschraubter Hutmutter 26 auf den Lamellenkorb 42 wirkt, diesen jedoch nicht nur radial in Richtung der Mittelachse 52 nach innen drückt, sondern gleichzeitig in Richtung der Schulter 100 beaufschlagt.

Somit wird der Borstenträger 68 bei auf den Lamellenkorb 42 einwirkender Hutmutter 26 stets druckbeaufschlagt an der Schulter 100 und somit an dem Gehäuse 10 anliegend gehalten.

Ist das Gehäuse 10 elektrisch leitend ausgeführt und der Borstenträger 68 zumindest mit einem elektrisch leitfähigen Außenkörper 90 versehen, welcher auf die Schenkel 84, 86 der U-förmigen Umbiegung 82 einwirken, so ist eine elektrisch leitende Verbindung zwischen den elektrisch leitfähigen Borsten 74a und 74b der Borstenkränze 70 bzw. 72 und dem Gehäuse 10 über den Außenkörper 90 herstellbar.

Somit lässt sich über eine elektrisch leitende Verbindung des Außenkörpers 10 auch der Kabelschirm 62 elektrisch leitend mit der Gehäusewand 16 verbinden.

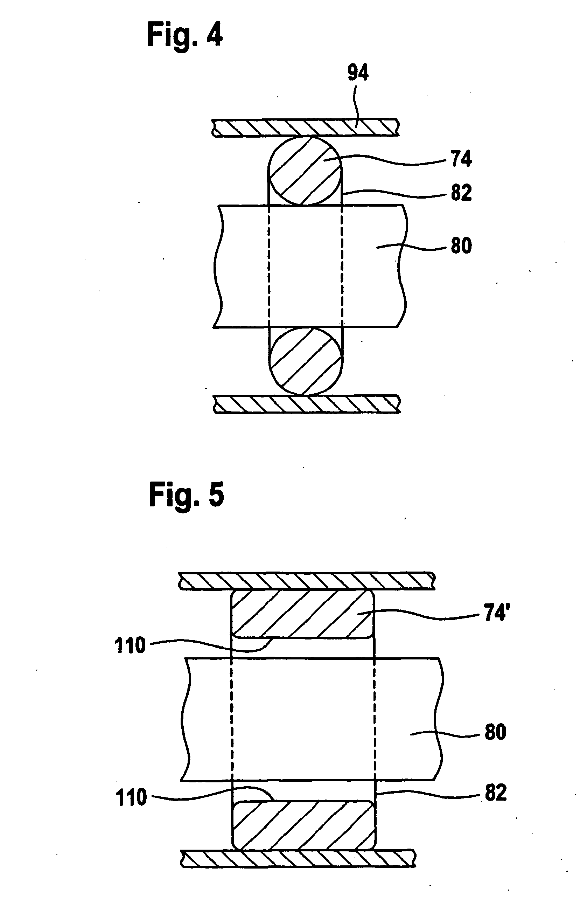

Wie in Figur 4 dargestellt, sind vorzugsweise die Borsten 74a und 74b mitsamt der Umbiegung 82 aus einem im Querschnitt runden elastischen und elektrisch leitfähigen Material, wie beispielsweise Kupfer hergestellt.

Es ist aber auch denkbar, wie in Figur 5 dargestellt, die Borsten 74' sowie die Umbiegung 82' aus einem elastischen und elektrisch leitfähigen, jedoch im Querschnitt rechteckförmigen Materialstreifen herzustellen, der um den Innenkörper 80 herum gelegt wird und vorzugsweise mit einer Flachseite 110 an dem Innenkörper 80 anliegt.

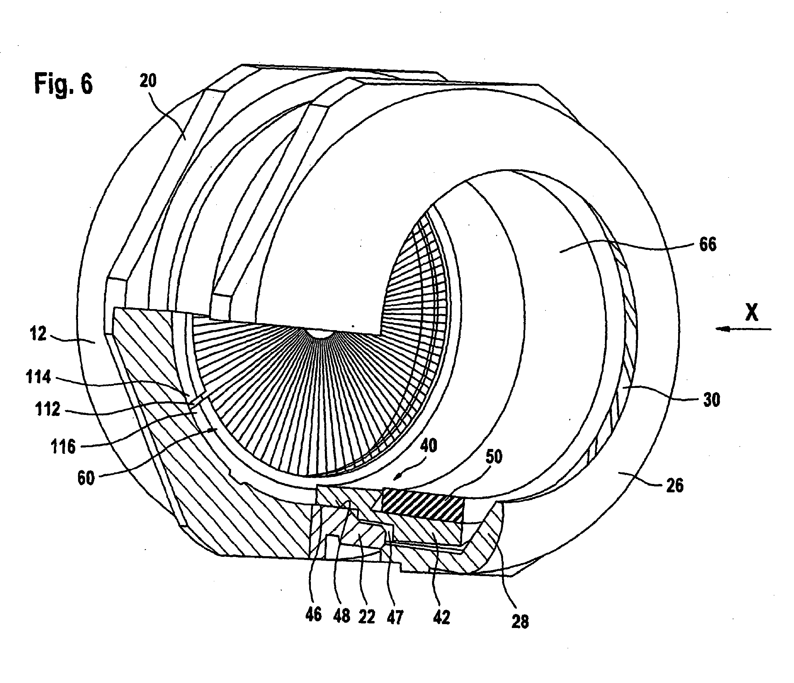

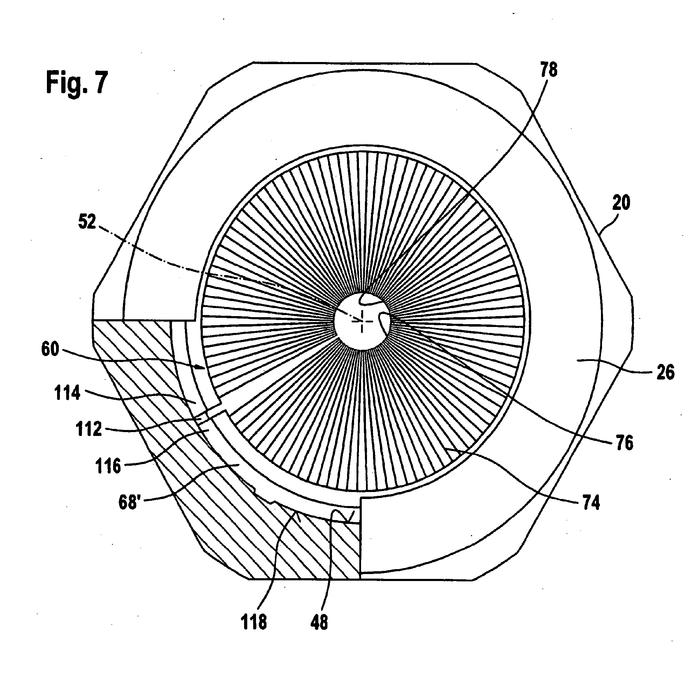

Bei einem dritten Ausführungsbeispiel einer erfindungsgemäßen Kabeldurchführung, dargestellt in den Figuren 6 und 7 sind diejenigen Elemente, die mit dem ersten Ausführungsbeispiel identisch sind, mit den gleichen Bezugszeichen versehen, so dass hinsichtlich der Erläuterung derselben vollinhaltlich auf die Ausführungen zum ersten Ausführungsbeispiel Bezug genommen werden kann.

Im Gegensatz zum ersten Ausführungsbeispiel ist der Borstenträger 68' als fast geschlossener Ring mit einem radialen Schlitz 112 ausgebildet, welcher so vorgespannt ist, dass an den Schlitz 112 angrenzende Enden 114 und 116 des Borstenträgers 68'die Tendenz haben, sich voneinander weg zu bewegen und somit eine durch den Mittelschenkel 92 gebildete Außenumfangsfläche 118 bezogen auf die Mittelachse 52 zumindest bereichsweise radial aufzuweiten.

Dadurch wird die Außenumfangsfläche 118 mit Vorspannung gegen die Innenfläche 48 der Hülse 44 angelegt, so dass der Borstenträger 68' einerseits an der Innenfläche 48 durch Reibschluss festgelegt ist und andererseits aufgrund des vorgespannten Anlegens der Außenumfangsfläche 118 an der Innenfläche 48 einen guten elektrisch leitenden Kontakt zwischen dem Borstenträger 68' und der Hülse 44 herstellt.

Somit ist eine sichere Fixierung des Borstenträgers 68' in der Hülse 44 gewährleistet, ohne dass zwingend die Notwendigkeit besteht, den Borstenträger 68' durch den Einsatz 40 in Richtung der Schulter 100 zu beaufschlagen.

## Patentansprüche

1. Kabeldurchführung, umfassend ein an einem Gerät fixierbares Gehäuse (10), eine an dem Gehäuse (10) gehaltene Fixierung (26, 40, 50) für ein Kabel (54) und ein an dem Gehäuse gehaltenes Schirmkontaktelement (60),
**dadurch gekennzeichnet, dass** das Schirmkontaktelement ein einen Kabelschirm (62) mit elastischen und elektrisch leitfähigen Borsten (74) kontaktierendes Borstenelement (60) umfasst.

2. Kabeldurchführung nach Anspruch 1, **dadurch gekennzeichnet, dass** das Borstenelement (60) über eine äußere Öffnung (47) des Gehäuses (10) in das Gehäuse (10) einführbar und in dem Gehäuse (10) festlegbar ist.

3. Kabeldurchführung nach Anspruch 2, **dadurch gekennzeichnet, dass** das Borstenelement (60) an einer am Gehäuse (10) vorgesehenen Abstützung (100) anlegbar ist.

4. Kabeldurchführung nach Anspruch 2 oder 3, **dadurch gekennzeichnet, dass** die Abstützung eine der äußeren Öffnung (47) zugewandte gehäuseseitige Anlagefläche (100) aufweist.

5. Kabeldurchführung nach Anspruch 3 oder 4, **dadurch gekennzeichnet, dass** das Borstenelement (60) in elektrisch leitendem Kontakt mit der Abstützung (100) steht.

6. Kabeldurchführung nach einem der voranstehenden Ansprüche, **dadurch gekennzeichnet, dass** das Borstenelement (60) in elektrisch leitendem Kontakt mit einer Innenfläche (48) des Gehäuses (10) steht.

7. Kabeldurchführung nach Anspruch 6, **dadurch gekennzeichnet, dass** das Borstenelement (60) durch ein sich durch elastische Vorspannung nach außen spreizendes Element (68') an der Innenfläche (48) des Gehäuses (10) anliegt.

8. Kabeldurchführung nach einem der voranstehenden Ansprüche, **dadurch gekennzeichnet, dass** das Borstenelement (60) in dem Gehäuse (10) kraftschlüssig fixiert ist.

9. Kabeldurchführung nach Anspruch 8, **dadurch gekennzeichnet, dass** das Borstenelement (60) durch ein sich elastisch nach außen spreizendes Element (68') ah einer Innenfläche (48) des Gehäuses (10) kraftschlüssig anliegt.

10. Kabeldurchführung nach einem der Ansprüche 3 bis 9, **dadurch gekennzeichnet, dass** das Borstenelement (60) zwischen der gehäuseseitigen Abstützung (100) und der Fixierung (26, 40, 50) in dem Gehäuse (10) angeordnet ist.

11. Kabeldurchführung nach Anspruch 10, **dadurch gekennzeichnet, dass** das Borstenelement (60) durch seine Lage zwischen der gehäuseseitigen Abstützung (100) und der Fixierung (26, 40, 50) festgelegt ist.

12. Kabeldurchführung nach Anspruch 11, **dadurch gekennzeichnet, dass** die Fixierung (26, 40, 50) das Borstenelement (60) mit einer elastischen Kraft in Richtung der gehäuseseitigen Anlagefläche (100) beaufschlagt.

13. Kabeldurchführung nach Anspruch 12, **dadurch gekennzeichnet, dass** das Fixieren des Kabels (54) in der Fixierung (26, 40, 50) eine Kraft auf die Fixierung (26, 40, 50) erzeugt, welche das Borstenelement (60) in Richtung der gehäuseseitigen Auflagefläche (100) beaufschlagt.

14. Kabeldurchführung nach einem der voranstehenden Ansprüche, **dadurch gekennzeichnet, dass** die Fixierung (26, 40, 50) einen in das Gehäuse (10) einsetzbaren Einsatz (40) umfasst, in welchem das Kabel (54) fixierbar ist.

15. Kabeldurchführung nach Anspruch 14, **dadurch gekennzeichnet, dass** der Einsatz (40) elastische Bereiche (42) aufweist, die durch eine Hutmutter (26) beaufschlagbar sind.

16. Kabeldurchführung nach Anspruch 15, **dadurch gekennzeichnet, dass** die Hutmutter (26) den Einsatz (40) in Richtung der gehäuseseitigen Anlagefläche (100) beaufschlagt.

17. Kabeldurchführung nach Anspruch 16, **dadurch gekennzeichnet, dass** der Einsatz (40) das Borstenelement (60) in Richtung der gehäuseseitigen Anlagefläche (100) beaufschlagt.

18. Kabeldurchführung nach einem der voranstehenden Ansprüche, **dadurch gekennzeichnet, dass** das Borstenelement (60) mindestens einen um eine Mittelachse (52) des Kabels eines Kabeldurchführungskanals (66) zumindest teilweise umlaufenden Borstenkranz (70, 72) aufweist.

19. Kabeldurchführung nach Anspruch 18, **dadurch gekennzeichnet, dass** das Borstenelement (60) zwei in Richtung der Mittelachse (52) versetzt zueinander angeordnete Borstenkränze (70, 72) aufweist.

20. Kabeldurchführung nach einem der voranstehenden Ansprüche, **dadurch gekennzeichnet, dass** das Borstenelement (60) einen Borstenträger (68) aufweist, in welchem die Borsten (74) verankert sind.

21. Kabeldurchführung nach Anspruch 20, **dadurch gekennzeichnet, dass** der Borstenträger (68) C-förmig oder ringähnlich ausgebildet ist.

22. Kabeldurchführung nach Anspruch 20 oder 21, **dadurch gekennzeichnet, dass** der Borstenträger (68') das sich nach außen spreizende Element bildet.

23. Kabeldurchführung nach Anspruch 22, **dadurch gekennzeichnet, dass** der Borstenträger (68') als mit einem radialen Schlitz (112) versehener Ringkörper ausgebildet ist.

24. Kabeldurchführung nach einem der Ansprüche 20 bis 23, **dadurch gekennzeichnet, dass** die Borsten (74) in dem Borstenträger (68) durch eine U-förmige Umbiegung (82) verankert sind.

25. Kabeldurchführung nach Anspruch 24, **dadurch gekennzeichnet, dass** die Borsten (74) als Doppelborsten (74a, b) ausgebildet sind und dass sich jede Borste (74) von jeweils einem Schenkel (84, 86) der U-förmigen Umbiegung (82) aus erstreckt.

26. Kabeldurchführung nach einem der Ansprüche 20 bis 25, **dadurch gekennzeichnet, dass** der Borstenträger (68) einen Innenkörper (80) aufweist, welchen die U-förmfge (82) umgreift.

27. Kabeldurchführung nach Anspruch 26, **dadurch gekennzeichnet, dass** die U-förmige Umbiegung (82) den Innenkörper (80) aus einer der Mittelachse (52) abgewandten Seite umgreift.

28. Kabeldurchführung nach einem der Ansprüche 20 bis 27, **dadurch gekennzeichnet, dass** der Borstenträger (68) einen Außenkörper (90) aufweist, welcher die Borsten (74) im Bereich der U-förmigen Umbiegung (82) an dem Innenkörper (80) angelegt hält.

29. Kabeldurchführung nach Anspruch 28, **dadurch gekennzeichnet, dass** der Außenkörper (90) durch Deformation auf die Einheit aus Borsten (74) und Innenkörper (80) aufgeformt ist.

30. Kabeldurchführung nach einem der voranstehenden Ansprüche, **dadurch gekennzeichnet, dass** die Borsten (74) im den Kabelschirm (62) nicht kontaktierenden Zustand sich quer zur Mittelachse (52) des Kabeldurchführungskanals (66) erstrecken.

31. Kabeldurchführung nach einem der voranstehenden Ansprüche, **dadurch gekennzeichnet, dass** die Borsten (74) in dem den Kabelschirm (62) nicht kontaktierenden Zustand sich ungefähr radial zur Mittelachse (52) erstrecken.

32. Kabeldurchführung nach einem der voranstehenden Ansprüche, **dadurch gekennzeichnet, dass** sich die Borsten (74) von dem Borstenträger (68) bis zu einer Mittelöffnung (78) hin erstrecken.

33. Kabeldurchführung nach einem der voranstehenden Ansprüche, **dadurch gekennzeichnet, dass** die Borsten (74) einen ungefähr runden oder ovalen Querschnitt aufweisen.

34. Kabeldurchführung nach einem der voranstehenden Ansprüche, **dadurch gekennzeichnet, dass** die Borsten (74) einen Querschnitt mit einer Flachseite (110) aufweisen.

35. Kabeldurchführung nach einem der voranstehenden Ansprüche, **dadurch gekennzeichnet, dass** die Borsten (74) eine Querschnittsfläche aufweisen, deren maximaler Durchmesser kleiner als 1 mm ist.

## Claims

1. Cable feedthrough, comprising a housing (10) adapted to be fixed to an appliance, a fixing device (26, 40, 50) for a cable (54) held on the housing (10) and a shield contact element (60) held on the housing, **characterized in that** the shield contact element comprises a bristle element (60) making contact with a cable shield (62) with elastic and electrically conductive bristles (74).

2. Cable feedthrough as defined in claim 1, **characterized in that** the bristle element (60) is insertable into the housing (10) via an outer opening (47) of the housing (10) and securable in the housing (10).

3. Cable feedthrough as defined in claim 2, **characterized in that** the bristle element (60) is adapted to abut on a support (100) provided on the housing (10).

4. Cable feedthrough as defined in claim 2 or 3, **characterized in that** the support has a contact surface (100) on the side of the housing facing the outer opening (47).

5. Cable feedthrough as defined in claim 3 or 4, **characterized in that** the bristle element (60) is in electrically conducting contact with the support (100).

6. Cable feedthrough as defined in any one of the preceding claims, **characterized in that** the bristle element (60) is in electrically conducting contact with an inner surface (48) of the housing (10).

7. Cable feedthrough as defined in claim 6, **characterized in that** the bristle element (60) abuts on the inner surface (48) of the housing (10) by means of an element (68') spreading outwards as a result of elastic tensioning.

8. Cable feedthrough as defined in any one of the preceding claims, **characterized in that** the bristle element (60) is fixed in the housing (10) in a force locking manner.

9. Cable feedthrough as defined in claim 8, **characterized in that** the bristle element (60) abuts on an inner surface (48) of the housing (10) in a force locking manner as a result of an element (68') spreading elastically outwards.

10. Cable feedthrough as defined in any one of claims 3 to 9, **characterized in that** the bristle element (60) is arranged in the housing (10) between the support (100) on the housing and the fixing device (26, 40, 50).

11. Cable feedthrough as defined in claim 10, **characterized in that** the bristle element (60) is secured as a result of its position between the support (100) on the housing and the fixing device (26, 40, 50).

12. Cable feedthrough as defined in claim 11, **characterized in that** the fixing device (26, 40, 50) acts on the bristle element (60) with an elastic force in the direction of the contact surface (100) on the housing.

13. Cable feedthrough as defined in claim 12, **characterized in that** the fixing in position of the cable (54) in the fixing device (26, 40, 50) generates a force on the fixing device (26, 40, 50) acting on the bristle element (60) in the direction of the contact surface (100) on the housing.

14. Cable feedthrough as defined in any one of the preceding claims, **characterized in that** the fixing device (26, 40, 50) comprises an insert (40) insertable into the housing (10), the cable (54) being adapted to be fixed in said insert.

15. Cable feedthrough as defined in claim 14, **characterized in that** the insert (40) has elastic areas (42) adapted to be acted upon by a cap nut (26).

16. Cable feedthrough as defined in claim 15, **characterized in that** the cap nut (26) acts on the insert (40) in the direction of the contact surface (100) on the housing.

17. Cable feedthrough as defined in claim 16, **characterized in that** the insert (40) acts on the bristle element (60) in the direction of the contact surface (100) on the housing.

18. Cable feedthrough as defined in any one of the preceding claims, **characterized in that** the bristle element (60) has at least one circle of bristles (70, 72) extending at least partially around a central axis (52) of the cable of a cable feedthrough channel (66).

19. Cable feedthrough as defined in claim 18, **characterized in that** the bristle element (60) has two circles of bristles (70, 72) arranged so as to be offset relative to one another in the direction of the central axis (52).

20. Cable feedthrough as defined in any one of the preceding claims, **characterized in that** the bristle element (60) has a bristle support (68), the bristles (74) being anchored in said support.

21. Cable feedthrough as defined in claim 20, **characterized in that** the bristle support (68) is designed in a C shape or like a ring.

22. Cable feedthrough as defined in claim 20 or 21, **characterized in that** the bristle support (68') forms the outwardly spreading element.

23. Cable feedthrough as defined in claim 22, **characterized in that** the bristle support (68') is designed as an annular member provided with a radial slot (112).

24. Cable feedthrough as defined in any one of claims 20 to 23, **characterized in that** the bristles (74) are anchored in the bristle support (68) by means of a U-shaped bent portion (82).

25. Cable feedthrough as defined in claim 24, **characterized in that** the bristles (74) are designed as double bristles (74a, b) and that each bristle (74) extends from a respective arm (84, 86) of the U-shaped bent portion (82).

26. Cable feedthrough as defined in any one of claims 20 to 25, **characterized in that** the bristle support (68) has an inner member (80), the U-shape (82) engaging around said inner member.

27. Cable feedthrough as defined in claim 26, **characterized in that** the U-shaped bent portion (82) engages around the inner member (80) from a side facing away from the central axis (52).

28. Cable feedthrough as defined in any one of claims 20 to 27, **characterized in that** the bristle support (68) has an outer member (90) keeping the bristles (74) in abutment on the inner member (80) in the area of the U-shaped bent portion (82).

29. Cable feedthrough as defined in claim 28, **characterized in that** the outer member (90) is formed onto the unit consisting of bristles (74) and inner member (80) as a result of deformation.

30. Cable feedthrough as defined in any one of the preceding claims, **characterized in that** the bristles (74) extend transversely to the central axis (52) of the cable feedthrough channel (66) in the state not making contact with the cable shield (62).

31. Cable feedthrough as defined in any one of the preceding claims, **characterized in that** the bristles (74) extend approximately radially to the central axis (52) in the state not making contact with the cable shield (62).

32. Cable feedthrough as defined in any one of the preceding claims, **characterized in that** the bristles (74) extend from the bristle support (68) as far as a central opening (78).

33. Cable feedthrough as defined in any one of the preceding claims, **characterized in that** the bristles (74) have an approximately round or oval cross section.

34. Cable feedthrough as defined in any one of the preceding claims, **characterized in that** the bristles (74) have a cross section with a flat side (110).

35. Cable feedthrough as defined in any one of the preceding claims, **characterized in that** the bristles (74) have a cross sectional surface area with a maximum diameter smaller than 1 mm.

## Revendications

1. Passage de câble, comportant un boîtier (10), destiné à être fixé contre un appareil, une fixation (26, 40, 50) pour un câble (54), maintenue sur le boîtier (10), et un contact formant écran (60) maintenu sur le boîtier,
**caractérisé en ce que** le contact formant écran comporte un élément à poils (60), par lequel un écran de câble (62) est mis en contact avec des poils (74) élastiques et électroconducteurs.

2. Passage de câble selon la revendication 1, **caractérisé en ce que** l'élément à poils (60) peut être introduit dans le boîtier (10) via une ouverture (47) extérieure du boîtier (10) et peut être fixé dans le boîtier (10).

3. Passage de câble selon la revendication 2, **caractérisé en ce que** l'élément à poils (60) peut être mis en appui contre un support (100) prévu sur le boîtier (10).

4. Passage de câble selon la revendication 2 ou 3, **caractérisé en ce que** le support comporte une surface d'appui (100) du côté boîtier, orientée vers l'ouverture (47) extérieure.

5. Passage de câble selon la revendication 3 ou 4, **caractérisé en ce que** l'élément à poils (60) est en contact électroconducteur avec le support (100).

6. Passage de câble selon l'une quelconque des revendications précédentes, **caractérisé en ce que** l'élément à poils (60) est en contact électroconducteur avec une surface intérieure (48) du boîtier (10).

7. Passage de câble selon la revendication 6, **caractérisé en ce que** l'élément à poils (60) est en appui contre la surface intérieure (48) du boîtier (10) au moyen d'un élément (68') s'élargissant vers l'extérieur sous l'effet d'une précontrainte élastique.

8. Passage de câble selon l'une quelconque des revendications précédentes, **caractérisé en ce que** l'élément à poils (60) est fixé par force dans le boîtier (10) .

9. Passage de câble selon la revendication 8, **caractérisé en ce que** l'élément à poils (60) est en appui par force contre une surface intérieure (48) du boîtier (10) au moyen d'un élément (68') s'élargissant élastiquement vers l'extérieur.

10. Passage de câble selon l'une quelconque des revendications 3 à 9, **caractérisé en ce que** l'élément à poils (60) est disposé dans le boîtier (10) entre le support (100) du côté boîtier et la fixation (26, 40, 50).

11. Passage de câble selon la revendication 10, **caractérisé en ce que** l'élément à poils (60) est fixé par son positionnement entre le support (100) du côté boîtier et la fixation (26, 40, 50).

12. Passage de câble selon la revendication 11, **caractérisé en ce que** l'élément à poils (60) est sollicité vers la surface d'appui (100) du côté boîtier par une force élastique exercée par la fixation (26, 40, 50).

13. Passage de câble selon la revendication 12, **caractérisé en ce que** la fixation du câble (54) dans la fixation (26, 40, 50) génère une force sur la fixation (26, 40, 50), par laquelle l'élément à poils (60) est sollicité vers la surface d'appui (100) du côté boîtier.

14. Passage de câble selon l'une quelconque des revendications précédentes, **caractérisé en ce que** la fixation (26, 40, 50) comporte un insert (40), qui est destiné à être posé dans le boîtier (10) et dans lequel le câble (^{.}54) peut être fixé.

15. Passage de câble selon la revendication 14, **caractérisé en ce que** l'insert (40) comporte des zones élastiques (42) qui peuvent être sollicitées par un écrou borgne (26).

16. Passage de câble selon la revendication 15, **caractérisé en ce que** l'écrou borgne (26) sollicite l'insert (40) vers la surface d'appui (100) du côté boîtier.

17. Passage de câble selon la revendication 16, **caractérisé en ce que** l'insert (40) sollicite l'élément à poils (60) vers la surface d'appui (100) du côté boîtier.

18. Passage de câble selon l'une quelconque des revendications précédentes, **caractérisé en ce que** l'élément à poils (60) comporte au moins une couronne de poils (70, 72) disposée au moins partiellement autour d'un axe médian (52) du câble d'un conduit (66) du passage de câble.

19. Passage de câble selon la revendication 18, **caractérisé en ce que** l'élément à poils (60) comporte deux couronnes de poils (70, 72) disposées en étant décalées l'une par rapport à l'autre vers l'axe médian (52).

20. Passage de câble selon l'une quelconque des revendications précédentes, **caractérisé en ce que** l'élément à poils (60) comporte un porte-poils (68) dans lequel sont ancrés les poils (74).

21. Passage de câble selon la revendication 20, **caractérisé en ce que** le porte-poils (68) est réalisé en forme de C ou avec une forme sensiblement annulaire.

22. Passage de câble selon la revendication 20 ou 21, **caractérisé en ce que** le porte-poils (68') forme l'élément s'élargissant vers l'extérieur.

23. Passage de câble selon la revendication 22, **caractérisé en ce que** le porte-poils (68') est réalisé sous la forme d'un corps annulaire muni d'une fente (112) radiale.

24. Passage de câble selon l'une quelconque des revendications 20 à 23, **caractérisé en ce que** les poils (74) sont ancrés dans le porte-poils (68) par une partie cintrée (82) en forme de U.

25. Passage de câble selon la revendication 24, **caractérisé en ce que** les poils (74) sont réalisés sous forme de doubles poils (74a, b) et **en ce que** chaque poil (74) s'étend respectivement à partir d'une branche (84, 86) de la partie cintrée (82) en forme de U.

26. Passage de câble selon l'une quelconque des revendications 20 à 25, **caractérisé en ce que** le porte-poils (68) comporte un corps intérieur (80), lequel est entouré par la partie cintrée (82) en forme de U.

27. Passage de câble selon la revendication 26, **caractérisé en ce que** la partie cintrée (82) en forme de U enserre le corps intérieur (80) à partir d'un côté opposé à l'axe médian (52).

28. Passage de câble selon l'une quelconque des revendications 20 à 27, **caractérisé en ce que** le porte-poils (68) comporte un corps extérieur (90), par lequel les poils (74) sont maintenus en appui contre le corps intérieur (80) dans la zone de la partie cintrée (82) en forme de U.

29. Passage de câble selon la revendication 28, **caractérisé en ce que** le corps extérieur (90) est formé par une déformation sur l'unité formée par les poils (74) et le corps intérieur (80).

30. Passage de câble selon l'une quelconque des revendications précédentes, **caractérisé en ce que** les poils (74), à l'état non en contact avec l'écran de câble (62)., s'étendent transversalement à l'axe médian (52) du conduit (66) du passage de câble.

31. Passage de câble selon l'une quelconque des revendications précédentes, **caractérisé en ce que** les poils (74), à l'état non en contact avec l'écran de câble (62), s'étendent à peu près radialement par rapport à l'axe médian (52).

32. Passage de câble selon l'une quelconque des revendications précédentes, **caractérisé en ce que** les poils (74) s'étendent depuis le porte-poils (68) jusqu'à une ouverture centrale (78).

33. Passage de câble selon l'une quelconque des revendications précédentes, **caractérisé en ce que** les poils (74) ont une section à peu près ronde ou ovale.

34. Passage de câble selon l'une quelconque des revendications précédentes, **caractérisé en ce que** les poils (74) ont une section avec un côté plat (110).

35. Passage de câble selon l'une quelconque des revendications précédentes, **caractérisé en ce que** les poils (74) ont une surface de section dont le diamètre maximum est inférieur à 1 mm.
